# EUROPEAN PATENT APPLICATION

(11) **EP 2 398 259 A1**
(43) Date of publication of application: **21.12.2011**
(21) Application number: 09839856.3
(22) Date of filing: 12.02.2009
(51) Int. Cl.: H04W 4/06

(54) **METHOD AND DEVICE FOR TRANSMITTING MOBILE MULTICAST SERVICE IN FIXED NETWORK**

(71) Applicant: Alcatel Lucent, 75008 Paris (FR)
(72) Inventor: ZHANG, Qingshan, Shanghai 201206 (CN); MA, Songwei, Shanghai 201206 (CN); ZHENG, Jun, Shanghai 201206 (CN)
(74) Representative: Zinsinger, Norbert
(86) International application number: PCT/CN2009/000149
(87) International publication number: WO 2010/091533

(57) **Abstract**

The present invention provides a method and device of communicating mobile multicast service in the fixed network by coupling, via the fixed network, a mobile base station to the mobile communication system of a mobile core network. In the present invention, a multicast service channel is established between gateway used for connecting a fixed network with mobile core network and an edge routing device in the fixed network, for communicating the mobile multicast service from mobile core network; while the edge routing device provides, in the access/convergence network of the fixed network, mobile multicast service for the mobile base station. With application of the device and method in the present invention, network resource of the fixed network may be saved, and payload of each network device is relieved.

## Description

### Technical field

The present invention relates to fixed network and mobile communication system, particularly to a method of communicating mobile multicast service in fixed network and device thereof.

### Background

Femtocell is introduced as super mini mobile base station in recent years according to 3G development and broadband trend for mobility. Femtocell is connected via such broadband circuit as ADSL, LAN, which are already owned by customers, the connectivity from IP network to mobile network in the far end is implemented via dedicated gateway, such that mobile signal coverage is extended into buildings/homes through fixed backhaul. Femtocell may be applicable to CDMA, GSM, UMTS and alike standard, with the same Mode and frequency band with other mobile base stations of the operator, thus is capable of being employed universally for such UE as mobile phone. It is a product on user side, and accessible via public IP network, therefore the security is much of an issue for operation guarantee.

Dedicated secure gateway, which is configured between IP broadband network and mobile core network, is a portal for communicating Femtocell and mobile core network. Every Femtocell sets up an enciphered path to the gateway by the technology of IPsec. The gateway needs to process numerous enciphered paths and to supervise the switches of a UE access/secede Femtocell.

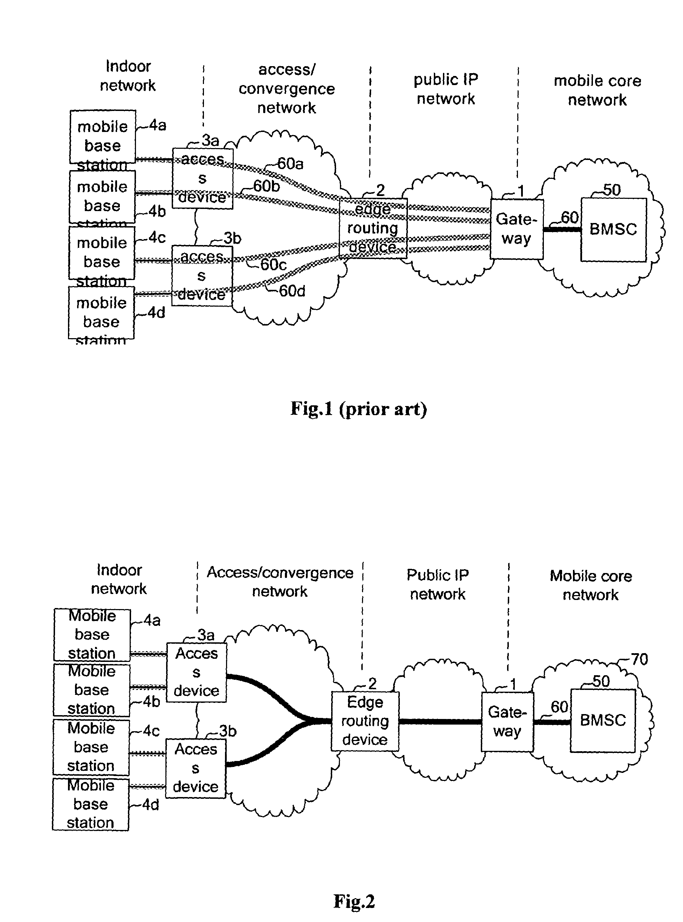

Fig. 1 illustrates a diagram wherein a mobile broadcast/multicast service is communicated by a fixed backhaul network in a communication network with the technology of femtocell in the prior art. As shown in Fig. 1, the communication network comprises a gateway 1, an edge routing device 2, an access device 3, a mobile base station 4 and a Broadcast/Multicast Service Center (BMSC) 50 , the fixed network comprises access/convergence network and public IP network. The gateway 1 is disposed between mobile core network and public IP network; the mobile base station 4 is connected to fixed access/convergence network via the access device 3, and set up a connection to the gateway 1 via the edge routing device 2. There is shown, in Fig.1, two access devices 3a and 3b, and four mobile base stations 4a, 4b, 4c, 4d, wherein the mobile base station devices 4a and 4b are connected to the access device 3a, and the mobile base station devices 4c and 4d are connected to the access device 3b, and the access devices 3a and 3b set up a connection to the edge routing device 2 through fixed access/convergence network. In one prior art, as UE (User Equipment) communicates through the mobile base station device 4, an IPsec channel will be set up between the mobile base station device 4 and the gateway device 1. For instance, while the mobile base station devices 4a, 4b, 4c, 4d all receive the broadcast /multicast service 60 from the broadcast multicast service center 50, these four mobile base station devices will establish IPsec channel with the gateway device 1 respectively, and the four IPsec channels convey one of the copies 60a, 60b, 60c, 60d of the broadcast/multicast service 60 respectively. It can be seen that, the method for communicating broadcast/multicast service between mobile core network and mobile base station, namely femtocell, in the prior art consumes numerous network resource, meanwhile heavy workload is brought to network device, including the gateway device 1, the edge routing device 2, the access device 3.

### Summary of the invention

To address the above problems in the prior art, there are provided, in the present invention, methods and devices for communicating mobile multicast service in the fixed network.

According to a first aspect of the present invention, there is provided a method, in a mobile communication system with a mobile base station connected to a mobile core network via an edge routing device in a fixed network, of providing service to the mobile base station by the gateway connecting the fixed network with the mobile core network, the method comprising the steps of: i. acquiring service data from the mobile core network; ii . if the service data from the mobile core network is data of multicast service, sending the data of the multicast service to the edge routing device in the fixed network, via a multicast service channel between the gateway and an edge routing device in the fixed network.

According to a second aspect of the present invention, there is provided a method, in a mobile communication system with a mobile base station connected to a mobile core network via an edge routing device in a fixed network, of providing multicast service to the mobile base station by the edge routing device in the fixed network, the method comprising the steps of:□I. acquiring a multicast management message from the mobile base station; III. creating, according to the multicast management message, a multicast tree in a multicast virtual LAN to which the multicast management message belongs; wherein, the multicast virtual LAN to which the multicast management message belongs is configured in a access/convergence network in the fixed network, and for the multicast service of one of the at least one mobile core network; IV. sending out the multicast service data requested by the multicast management message according to the multicast tree.

According to a third aspect of the present invention, there is provided a method, in a mobile communication system with a mobile base station connected to at least one mobile core network via an access device in a fixed network, of providing multicast service to the mobile base station by an access device in the fixed network, the method comprising the steps of: α . acquiring a multicast management message from the mobile base station; β . creating, according to the multicast management message, a multicast tree in a multicast virtual LAN to which the multicast management message belongs; wherein, the multicast virtual LAN to which the multicast management message belongs is configured in a access/convergence network in the fixed network, and for the multicast service of one of the at least one mobile core network; γ . forwarding the multicast management message in the multicast virtual LAN to which the multicast management message belongs; λ . acquiring the multicast service data requested by the multicast management message and forwarding it to the mobile base station.

According to a fourth aspect of the present invention, there is provided a first service providing device, in a mobile communication system with a mobile base station connected to a mobile core network via an edge routing device in a fixed network, in the gateway connecting the fixed network with the mobile core network, for providing service to the mobile base station, the first service providing device comprising: a first service-data acquiring device configured to acquire service data from the mobile core network; a first service-data sending device configured to send, if the service data from the mobile core network is data of multicast service, the data of the multicast service to the edge routing device in the fixed network, via a multicast service channel between the gateway and an edge routing device in the fixed network.

According to a fifth aspect of the present invention, there is provided a second service-providing device, in a mobile communication system with a mobile base station connected to a mobile core network via an edge routing device in a fixed network, in the edge routing device in the fixed network, for providing multicast service to the mobile base station, the second service-providing device comprising: a first acquiring device for multicast management message, configured to acquire a multicast management message from the mobile base station; a first creating device for multicast tree, configure to create, according to the multicast management message, a multicast tree in a multicast virtual LAN to which the multicast management message belongs; wherein, the multicast virtual LAN to which the multicast management message belongs is configured in a access/convergence network in the fixed network, and for the multicast service of one of the at least one mobile core network; a second sending device for service data, configured to send out the multicast service data requested by the multicast management message according to the multicast tree.

According to a sixth aspect of the present invention, there is provided a third service-providing device, in a mobile communication system with a mobile base station connected to at least one mobile core network via an access device in a fixed network, in an access device in the fixed network, for providing multicast service to the mobile base station, the third service-providing device comprising: a second acquiring device for multicast management message, configured to acquire a multicast management message from the mobile base station; a second creating device for multicast tree, configured to create, according to the multicast management message, a multicast tree in a multicast virtual LAN to which the multicast management message belongs; wherein, the multicast virtual LAN to which the multicast management message belongs is configured in a access/convergence network in the fixed network, and for the multicast service of one of the at least one mobile core network; a forwarding device for multicast management message, configured to forward the multicast management message in the multicast virtual LAN to which the multicast management message belongs; a service-data forwarding device, configured to acquire the multicast service data requested by the multicast management message and forward it to the mobile base station.

According to a seventh aspect of the present invention, there is provided a gateway for coupling a fixed network to a mobile core network, comprising the first service-providing device according to the fourth aspect of the present invention.

According to a eighth aspect of the present invention, there is provided an edge routing device, comprising the second service-providing device according to the fifth aspect of the present invention.

According to a ninth aspect of the present invention, there is provided an access device, comprising the third service-providing device according to the sixth aspect of the present invention.

With the technical scheme provided in the present invention, network resource in the fixed network may be saved, and the payload of each network device may be decreased, for example gateway, edge routing device, access device.

### Brief description of the drawings

Features, aspects and advantages of the present invention will become more obvious by reading the following description of non-limiting embodiments with the aid of appended drawings.
Fig.1 illustrates a diagram wherein a mobile broadcast/multicast service is communicated by a fixed backhaul network in a communication network with the technology of femtocell in the prior art;
Fig.2 illustrates a diagram wherein a mobile broadcast/multicast service is communicated by a fixed backhaul network in a communication system according to an embodiment of the present invention;

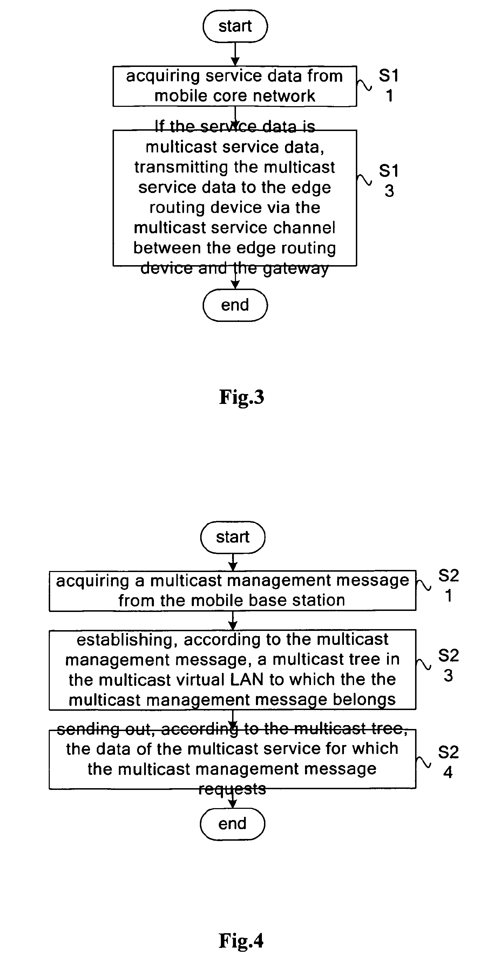

Fig.3 illustrates a flow chart of a method, in a mobile communication system with a mobile base station connected to a mobile core network via an edge routing device in a fixed network, of providing service to the mobile base station by the gateway for connecting the fixed network with the mobile core network according to an embodiment of the present invention;
Fig.4 illustrates a flow chart of a method, in a mobile communication system with a mobile base station connected to a mobile core network via an edge routing device in a fixed network, of providing multicast service to the mobile base station by the edge routing device in the fixed network according to an embodiment of the present invention;

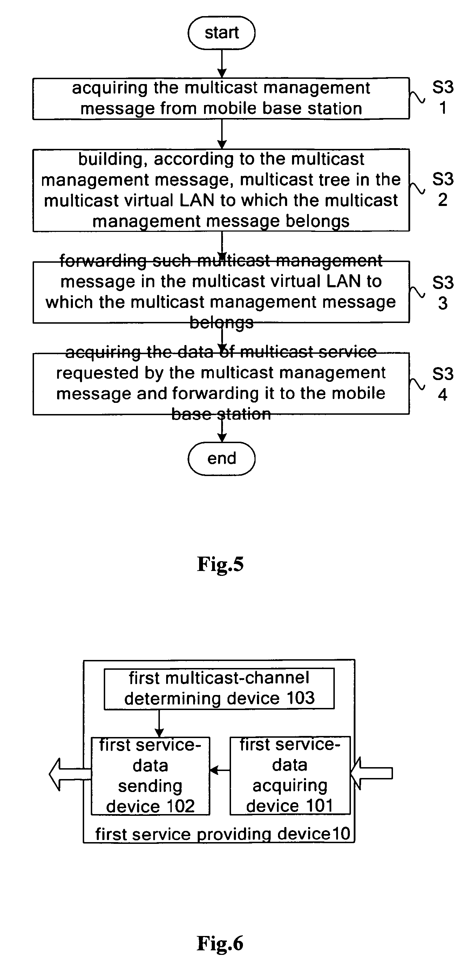

Fig.5 illustrates a flow chart of a method, in a mobile communication system with a mobile base station connected to at least one mobile core network via an access device in a fixed network, of providing multicast service to the mobile base station by an access device in the fixed network according to an embodiment of the present invention;
Fig.6 illustrates a function block diagram of a first service providing device, in a mobile communication system with a mobile base station connected to a mobile core network via an edge routing device in a fixed network, in the gateway for connecting the fixed network with the mobile core network, for providing service to the mobile base station according to an embodiment of the present invention;

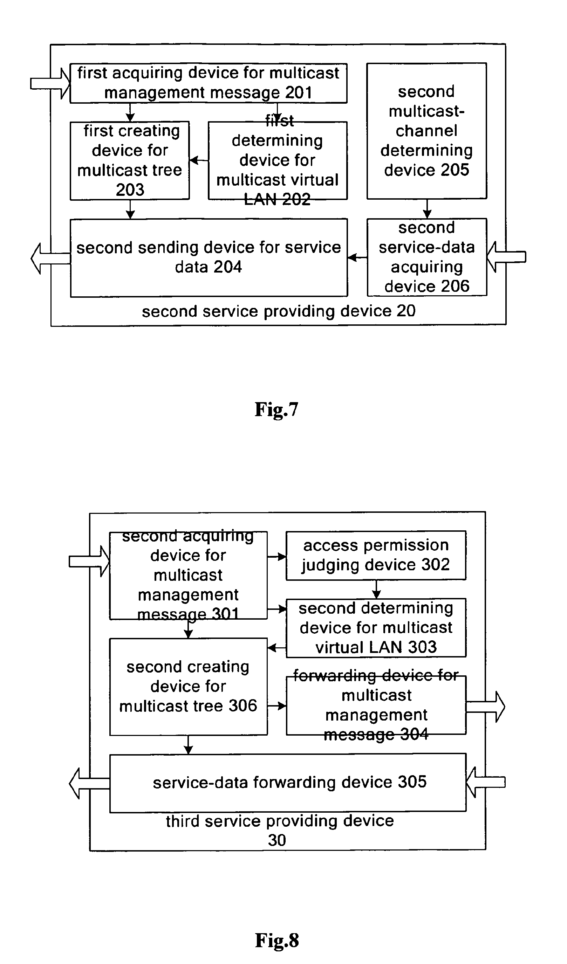

Fig.7 illustrates a function block diagram of a second service-providing device, in a mobile communication system with a mobile base station connected to a mobile core network via an edge routing device in a fixed network, in the edge routing device in the fixed network, for providing multicast service to the mobile base station according to an embodiment of the present invention;
Fig.8 illustrates a function block diagram of a third service-providing device, in a mobile communication system with a mobile base station connected to at least one mobile core network via an access device in a fixed network, in an access device in the fixed network, for providing multicast service to the mobile base station according to an embodiment of the present invention;
wherein, same or similar reference numerals refer to the same or similar device (module) or step of method.

### Detailed description of embodiments

Fig.2 illustrates a diagram wherein a mobile broadcast/multicast service is communicated by a fixed backhaul network in a communication system according to an embodiment of the present invention. As shown in Fig.2, communication network comprises the mobile base station 4, the access device 3, the edge routing device 2, the gateway 1 and the broadcast multicast service center ( Broadcast/Multicast Service Center, BMSC ) 50, the fixed network comprises access/convergence network and public IP network. The mobile base station 4 accesses the fixed access/convergence network via the access device 3, and accesses public IP network via the edge routing device 2, and establishes a connection with the mobile core network 70 via the gateway 1 arranged between the public IP network and the mobile core network. The broadcast multicast service center 50 in the mobile core network 70 is used for providing broadcast multicast service. Fig.2 illustrates four mobile base stations 4a, 4b, 4c, 4d and two access devices 3a, 3b, wherein mobile base stations 4a, 4b are connected to the access device 3a, and the mobile base station 4c, 4d are connected to the access device 3b. Generally, the mobile base stations 4a-4d are configured indoors. According to particular access mode used in the fixed network, for example ADSL mode or LAN mode, the access devices 3a, 3b may be digital subscriber line access multiplexer (DSLAM), a router or a switch. Of course, particular access mode used in the fixed network and the particular type of access device 3 are not limited to the above. The number of each device is merely exemplarily shown in Fig.2, but not intended for limit. In prior art, an IPsec channel is established between the mobile base station 4 and the gateway 1 for communicating mobile multicast service. In the present invention, a multicast service channel is established between the gateway 1 and the edge routing device 2 for communicating the mobile multicast service in the mobile core network 70; while the edge routing device 2 provides mobile base station 4 with the mobile multicast service in fixed access /convergence network.

Fig.3 illustrates a flow chart of a method, in a mobile communication system with a mobile base station connected to a mobile core network via an edge routing device in a fixed network, of providing service to the mobile base station by the gateway for connecting the fixed network with the mobile core network according to an embodiment of the present invention.

Fig.4 illustrates a flow chart of a method, in a mobile communication system with a mobile base station connected to a mobile core network via an edge routing device in a fixed network, of providing multicast service to the mobile base station by the edge routing device in the fixed network according to an embodiment of the present invention.

Fig.5 illustrates a flow chart of a method, in a mobile communication system with a mobile base station connected to at least one mobile core network via an access device in a fixed network, of providing multicast service to the mobile base station by an access device in the fixed network according to an embodiment of the present invention.

Hereinafter, the present invention is described from a method aspect, in combination with Fig.2 through Fig.5.

According to an embodiment of the present invention, the method that the gateway 1 provides the mobile base station 4a with a service comprises the following steps.

In step S 11, the gateway 1 acquires service data from mobile core network. For example, the gateway 1 acquires the mobile multicast service from the broadcast multicast service center 50.

In the step S13, the gateway 1 judges the service type of service data from a mobile core network. If the service data is multicast service data, the gateway 1 transmits the multicast service data to the edge routing device 2 via the multicast service channel between the edge routing device 2 and the gateway 1. If the service data is not a multicast service data, then the service data may be communicated by means of the establishment of an IPsec channel between a gateway 1 and the mobile base station 4a.

Preferably, prior to the stepS13, there is further included a step: gateway 1 determines the multicast service channel between itself and the edge routing device 2. Specifically, the multicast service channel may be established in the following ways. The first way is to establish a multicast service channel by means of point to multipoint label switched channel (P2MP LSP) between the gateway 1 and the edge routing device 2, because normally, the gateway 1 establishes connection with multiple edge routing devices. The second way is to establish a multicast service channel by means of general routing encapsulation tunnel (GRE tunnel) between the gateway 1 and the edge routing device 2. Normally, one edge routing device is connected to multiple access devices, while each access device couples to several mobile base stations, thus it could be statistically deemed that a multicast service between the edge routing device 2 and the gateway 1 is always required. As for the above two ways, the multicast service channel are configured manually, and the gateway 1 determines, according to the configuration, the multicast service channel between itself and the edge routing device 2. Additionally, the multicast service channel may be established dynamically by means of Layer 3 multicast protocol between the gateway 1 and the edge routing device 2, and the multicast protocol in use may be any one or more of the following protocols: PIM-SM, PIM-DM, DVMRP, MOSPF, MSDP.

When mobile core network 70 is connected to the fixed network via the gateway 1, at least one multicast virtual LAN is configured in the fixed access/convergence network for mobile multicast service from the mobile core network 70, the different multicast services from mobile core network 70 may communicate within the same multicast virtual LAN, or communicate across different multicast virtual LAN. Such multicast virtual LAN generally comprises several ports of the edge routing device 2 and several ports of several access device(s) 3.

Normally, different mobile operator possess different mobile core network. Different mobile core network connects to fixed network via different gateway, then, different multicast virtual LAN needs to be configured for different mobile core network in the fixed access/convergence network.

According to an embodiment of the present invention, multicast virtual LAN is configured at least for the mobile multicast service from mobile core network 70 in the fixed access/convergence network, the multicast virtual LAN at least comprises a portion of ports of the edge routing device 2 and portion of ports of the access device 3a, for instance the ports to which the mobile base station 4a is connected, such that the multicast virtual LAN at least comprises a path from the mobile base station 4a to the edge routing device 2. In such embodiment, the method that the edge routing device 2 provides mobile base station 4a with multicast service comprises the following steps.

In the step S21, the edge routing device 2 acquires a multicast management message from the mobile base station 4a. Such multicast management message is used for requesting multicast service 60 from mobile core network 70, and communicates in the multicast virtual LAN configured for mobile multicast service in the mobile core network 70, and is forwarded by the access device 4a and received by the edge routing device 2.

In the step S23, the edge routing device 2 establishes, according to such multicast management message, a multicast tree for the multicast service 60 in the corresponding multicast virtual LAN. Specifically, according to the content of the multicast management message, the edge routing device 2 opens the corresponding ports to aid building a multicast tree for the multicast service 60.

Then, in the step S24, the edge routing device 2 sends out the data of the multicast service 60 according to the multicast tree for the multicast service 60.

The edge routing device 2 are possibly connected to different mobile core network via different gateway, and the mobile base station 4a may request for mobile multicast services from different mobile core networks. Thus, after the step S21 and prior to step S23, there is preferably included a step S22: according to the multicast management message from mobile base station 4a, the edge routing device 2 determines corresponding multicast virtual LAN, namely the multicast virtual LAN configured for mobile multicast service of mobile core network 70.

Specifically, the edge routing device 2 acquires multicast service 60 from mobile core network 70 by performing the following steps. First, the edge routing device 2 determines the multicast service channel between itself and the gateway 1. As aforesaid, such multicast service channel may be pre-configured manually by means of point to multipoint label switched channel or general routing encapsulation tunnel. Otherwise, such multicast service channel may be established dynamically by Layer 3 multicast protocol between the edge routing device 2 and the gateway 1, and multicast protocol in use may be any one or more of the following protocols: PIM-SM, PIM-DM, DVMRP, MOSPF, MSDP. Then, the edge routing device 2 acquires the data of the multicast service 60 via such multicast service channel.

In the above embodiment, the method that the access device 3a provides mobile base station 4a with the multicast service comprises the following steps.

In the step S31, the access device 3a acquires the multicast management message from mobile base station 4a. Such multicast management message is used for requesting the multicast service 60 from mobile core network 70.

In the step S32, according to such multicast management message, the access device 3a build multicast tree for multicast service 60 in the multicast virtual LAN configured for the mobile multicast service of the mobile core network 70. Specifically, the access device 3a opens corresponding port according to the content of such multicast management message, to aid in building a multicast tree for multicast service 60.

In the step S33, the access device 3a forwards such multicast management message in the multicast virtual LAN configured for the mobile multicast service of the mobile core network 70, so as to communicate such multicast management message to the edge routing device 2.

In the step S34, the access device 3a acquires the data of multicast service 60 and forwards it to the mobile base station 4a.

The edge routing device 2 is possibly connected to different mobile core networks via different gateways, the mobile base station 4a possibly requests mobile multicast services from different mobile core networks. Therefore, after the step S31 and prior to step S32, there is preferably further included a step: according to the multicast management message from mobile base station 4a, the access device 3a determines the corresponding multicast virtual LAN, namely the multicast virtual LAN configured for the mobile multicast service of the mobile core network 70.

Advantageously, the access device 3a provides mobile multicast service with accessing control function so as to prevent multicast management message with invalid request from communicating in the multicast virtual LAN. Specifically, after the step S31, a judging step is performed, the access device 3a judges whether the mobile base station 4a has the permission to receive multicast service 60 according to multicast management message acquired from the mobile base station 4a. If the mobile base station 4a has no such permission, then the access device 3a discards such multicast management message. If the mobile base station 4a has such permission, then the access device 3a goes on with the previous step S32 through S34.

In the above embodiment, particularly, IGMP protocol may be used to establish and maintain different multicast groups in the fixed network. To be specific, the multicast management message transmitted by the mobile base station 4a may be IGMP adding message.

By utilizing the methods in the present invention, the network resource in the fixed network can be saved, and the payload of each network device can be decreased. For example, when mobile base stations 4a, 4b, 4c, 4d all request the multicast service 60 from the mobile core network 70, in public IP network, only one multicast service channel needs to be established between the gateway 1 and the edge routing device 2 for communicating multicast service 60; in the access network, only one copy of the data of multicast service 60 needs to be communicated on the multicast channel between the edge routing device 2 and the access device 3a ( or 3b ), no matter how many mobile base stations 4 acquire the data of multicast service 60 via the access device 3a ( or 3b ).

Fig.6 illustrates a function block diagram of a first service providing device, in a mobile communication system with a mobile base station connected to a mobile core network via an edge routing device in a fixed network, in the gateway for connecting the fixed network with the mobile core network, for providing service to the mobile base station according to an embodiment of the present invention. As shown in Fig.6, the first service providing device 10 comprises: a first multicast-channel determining device 103, a first service-data acquiring device 101, a first service-data sending device 102. In various embodiments of the present invention, the first service providing device 10 may comprise partial or all devices shown in Fig.6 and those device(s) not shown in the Figure. The first service providing device 10 is typically configured within the gateway 1.

Fig.7 illustrates a function block diagram of a second service-providing device, in a mobile communication system with a mobile base station connected to a mobile core network via an edge routing device in a fixed network, in the edge routing device in the fixed network, for providing multicast service to the mobile base station according to an embodiment of the present invention. As shown in Fig.7, The second service providing device 20 comprise: a first acquiring device for multicast management message 201, a first determining device for multicast virtual LAN 202, a first creating device for multicast tree 203, a second sending device for service data 204, a second multicast-channel determining device 205, a second service-data acquiring device 206. In the various embodiments of the present invention, the second service providing device 20 may comprise partial or all devices as shown in Fig.7 and other device(s) not shown in the Figure. The second service providing device 20 are typically configured within the edge routing device 2.

Fig.8 illustrates a function block diagram of a third service-providing device, in a mobile communication system with a mobile base station connected to at least one mobile core network via an access device in a fixed network, in an access device in the fixed network, for providing multicast service to the mobile base station according to an embodiment of the present invention. As shown in Fig.8, the third service providing device 30 comprise: a second acquiring device for multicast management message 301, an access permission judging device 302, a second determining device for multicast virtual LAN 303, a forwarding device for multicast management message 304, a service-data forwarding device 305, a second creating device for multicast tree 306. In the various embodiments of the present invention, the third service providing device 30 may comprise partial or all devices shown in Fig.8 and other device(s) not shown in the figure. The third service providing device 30 is typically configured within the access devices 3a, 3b.

Description will be made for the present invention from the device aspect, in combination with Fig.2, Fig.6, Fig.7, Fig.8.

According to an embodiment of the present invention, the first service providing device 10 in the gateway 1 comprises a first service-data acquiring device 101, a first service-data sending device 102. The following operations will be performed in the first service providing device 10 to provide the mobile base station 4a with a service.

First, the first service-data acquiring device 101 acquires service data from mobile core network. For example, the first service-data acquiring device 101 acquires the mobile multicast service from the broadcast multicast service center 50.

Then, the first service-data sending device 102 judges the service type of service data from a mobile core network. If the service data is multicast service data, the first service-data sending device 102 transmits the multicast service data to the edge routing device 2 via the multicast service channel between the edge routing device 2 and the gateway 1. If the service data is not multicast service data, then the first service-data sending device 102 may communicate the service data by means of an IPsec channel between a gateway 1 and the mobile base station 4a.

Preferably, the first service providing device 10 further comprises the first multicast-channel determining device 103 which is used to determine the multicast service channel between the gateway 1 and the edge routing device 2. Specifically, the multicast service channel may be established in the following ways. The first way is to establish a multicast service channel by means of point to multipoint label switched channel (P2MP LSP) between the gateway 1 and the edge routing device 2, because normally, the gateway 1 establishes connection with multiple edge routing devices. The second way is to establish a multicast service channel by means of general routing encapsulation tunnel (GRE tunnel) between the gateway 1 and the edge routing device 2. Normally, one edge routing device is connected to multiple access devices, while each access device couples to several mobile base stations, thus it could be statistically deemed that a multicast service between the edge routing device 2 and the gateway 1 is always required. As for the above two ways, the multicast service channel are configured manually, and the first multicast-channel determining device 103 determines, according to the configuration, the multicast service channel between the gateway 1 and the edge routing device 2. Additionally, the multicast service channel between the gateway 1 and the edge routing device 2 may be established dynamically by the first multicast-channel determining device 103 and corresponding device in the edge routing device 2 by means of Layer 3 multicast protocol, and the multicast protocol in use may be any one or more of the following protocols: PIM-SM, PIM-DM, DVMRP, MOSPF, MSDP.

When mobile core network 70 is connected to the fixed network via the gateway 1, at least one multicast virtual LAN is configured in the fixed access / convergence network for mobile multicast service from the mobile core network 70, the different multicast services from mobile core network 70 may communicate within the same multicast virtual LAN, or communicate across different multicast virtual LAN. Such multicast virtual LAN generally comprises several ports of the edge routing device 2 and several ports of several access device(s) 3.

Normally, different mobile operator possess different mobile core network. Different mobile core network connects to fixed network via different gateway, then, different multicast virtual LAN needs to be configured for different mobile core network in the fixed access/convergence network.

According to an embodiment of the present invention, multicast virtual LAN is configured at least for the mobile multicast service from mobile core network 70 in the fixed access/convergence network, the multicast virtual LAN at least comprises a portion of ports of the edge routing device 2 and portion of ports of the access device 3a, for instance the ports to which the mobile base station 4a is connected, such that the multicast virtual LAN at least comprises a path from the mobile base station 4a to the edge routing device 2. In such embodiment, the second service providing device 20 in the edge routing device 2 comprises the first acquiring device for multicast management message 201, the first creating device for multicast tree 203, the second sending device for service data 204. The following operations will be performed in the second service providing device 20 to provide mobile base station 4a with multicast service.

The first acquiring device for multicast management message 201 acquires a multicast management message from the mobile base station 4a. Such multicast management message is used for requesting multicast service 60 from mobile core network 70, and communicates in the multicast virtual LAN configured for mobile multicast service in the mobile core network 70, and is forwarded by the access device 4a and received by the first acquiring device for multicast management message 201 in the edge routing device 2.

The first creating device for multicast tree 203 establishes, according to such multicast management message, a multicast tree for the multicast service 60 in the corresponding multicast virtual LAN. Specifically, the first creating device for multicast tree 203 opens, according to the content of the multicast management message, the corresponding ports to aid building a multicast tree for the multicast service 60.

The second sending device for service data 204, sends out the data of the multicast service 60 according to the multicast tree for the multicast service 60.

The edge routing device 2 are possibly connected to different mobile core network via different gateway, and the mobile base station 4a may request for mobile multicast services from different mobile core networks. Thus, preferably, the second service providing device 20 further comprises the first determining device for multicast virtual LAN 202 configured to determine corresponding multicast virtual LAN according to the multicast management message from mobile base station 4a, namely the multicast virtual LAN configured for mobile multicast service of mobile core network 70.

Specifically, the second service providing device 20 further comprises the second multicast-channel determining device 205,the second service-data acquiring device 206. The second service providing device 20 acquires multicast service 60 from mobile core network 70 by performing the following operations. First, the second multicast-channel determining device 205 determines the multicast service channel between the edge routing device 2 and the gateway 1. As aforesaid, such multicast service channel may be pre-configured manually by means of point to multipoint label switched channel or general routing encapsulation tunnel, and the second multicast-channel determining device 205 determines such multicast service channel according to the configuration therein. Otherwise, such multicast service channel may be established dynamically by Layer 3 multicast protocol between the second multicast-channel determining device 205 in the edge routing device 2 and the first multicast-channel determining device 103 in the gateway 1, and multicast protocol in use may be any one or more of the following protocols: PIM-SM, PIM-DM, DVMRP, MOSPF, MSDP. Then, the second service-data acquiring device 206 acquires the data of the multicast service 60 via such multicast service channel.

In the above embodiment, the third service providing device 30 in the access device 3a comprises the second acquiring device for multicast management message 301, the second creating device for multicast tree 306, the forwarding device for multicast management message 304, the service-data forwarding device 305. The following operations will be performed in the third service providing device 30 to provide mobile base station 4a with the multicast service.

First, the second acquiring device for multicast management message 301 acquires the multicast management message from mobile base station 4a. Such multicast management message is used for requesting the multicast service 60 from mobile core network 70.

Then, according to such multicast management message, the second creating device for multicast tree 306builds multicast tree for multicast service 60 in the multicast virtual LAN configured for the mobile multicast service of the mobile core network 70. Specifically, the second creating device for multicast tree 306 opens corresponding port of the access device 3a according to the content of such multicast management message, to aid in building a multicast tree for multicast service 60.

The forwarding device for multicast management message 304 forwards such multicast management message in the multicast virtual LAN configured for the mobile multicast service of the mobile core network 70, so as to communicate such multicast management message to the edge routing device 2.

Later, service-data forwarding device 305acquires the data of multicast service 60 and forwards it to the mobile base station 4a.

The edge routing device 2 is possibly connected to different mobile core networks via different gateways, the mobile base station 4a possibly requests mobile multicast services from different mobile core networks. Therefore, preferably, the third service providing device 30 further comprises the second determining device for multicast virtual LAN 303, which is configured to determine the corresponding multicast virtual LAN according to the multicast management message from mobile base station 4a, namely the multicast virtual LAN configured for the mobile multicast service of the mobile core network 70.

Advantageously, the access device 3a provides mobile multicast service with accessing control function so as to prevent multicast management message with invalid request from communicating in the multicast virtual LAN. Specifically, the third service providing device 30 further comprises the access permission judging device 302. After the second acquiring device for multicast management message 301 acquires a multicast management message from mobile base station 4a, the access permission judging device 302 judges whether the mobile base station 4a has the permission to receive multicast service 60 according to multicast management message acquired from the mobile base station 4a. If the mobile base station 4a has no such permission, then the third service providing device 30 discards such multicast management message. If the mobile base station 4a has such permission, then the second creating device for multicast tree 306, the forwarding device for multicast management message 304 and the service-data forwarding device 305 etc. in the third service providing device 30 continues with individual operation respectively.

In the above embodiment, particularly, IGMP protocol may be used to establish and maintain different multicast group in the fixed network. To be specific, the multicast management message transmitted by the mobile base station 4a may be IGMP adding message.

By utilizing the devices in the present invention, the network resource in the fixed network can be saved, and the payload of each network device can be decreased. For example, when mobile base stations 4a, 4b, 4c, 4d all request the multicast service 60 from the mobile core network 70, in public IP network, only one multicast service channel needs to be established between the gateway 1 and the edge routing device 2 for communicating multicast service 60; in the access network, only one copy of the data of multicast service 60 needs to be communicated on the multicast channel between the edge routing device 2 and the access device 3a ( or 3b ), no matter how many mobile base stations 4 acquire the data of multicast service 60 via the access device 3a ( or 3b ).

Those skilled in the art can appreciate that, the device(s) in the present invention, may be embodied as hardware device, or as functional module of software.

Descriptions are made, as aforesaid, for non-limited embodiments of the present invention, however the present invention is not limited to particular system, device and specific protocol, and those skilled in the art can make any variation or modification within the scope of the appended claims.

## Claims

1. A method, in a mobile communication system with a mobile base station connected to a mobile core network via an edge routing device in a fixed network, of providing service to said mobile base station by the gateway connecting said fixed network with said mobile core network, said method comprising the steps of:
i . acquiring service data from said mobile core network;
ii . if said service data from said mobile core network is data of multicast service, sending said data of said multicast service to said edge routing device in said fixed network, via a multicast service channel between said gateway and an edge routing device in said fixed network.

2. The method according to claim 1, prior to said step ii, further comprising step a:
determining a multicast service channel between said gateway and said edge routing device in said fixed network.

3. The method according to claim 2, wherein, in said step a, said multicast service channel is constructed by the way of point to multipoint label switched channel.

4. The method according to claim 2, wherein, in said step a, said multicast service channel is constructed by the way of generic routing encapsulation channel.

5. The method according to claim 2, wherein, in said step a, said multicast service channel is constructed by virtue of any one or more of the following Multicast Protocol of layer 3:
PIM-SM, PIM-DM, DVMRP, MOSPF, MSDP.

6. A method, in a mobile communication system with a mobile base station connected to a mobile core network via an edge routing device in a fixed network, of providing multicast service to said mobile base station by the edge routing device in said fixed network, said method comprising the steps of:
I. acquiring a multicast management message from said mobile base station;
III. creating, according to said multicast management message, a multicast tree in a multicast virtual LAN to which said multicast management message belongs; wherein, said multicast virtual LAN to which said multicast management message belongs is configured in a access/convergence network in said fixed network, and for the multicast service of one of said at least one mobile core network;
IV. sending out the multicast service data requested by said multicast management message according to said multicast tree.

7. The method according to claim 6, wherein, after said step□, prior to said step□, said method further comprises the step:
II. determining the multicast virtual LAN to which said multicast management message belongs according to said multicast management message.

8. The method according to claim 6 or 7, wherein, further comprising the steps of:
A . determining the multicast service channel between said edge routing device and a gateway connecting said fixed network with the mobile core network for which said multicast virtual LAN is used;
B . acquiring the multicast service data requested by said multicast management message via said multicast service channel.

9. The method according to claim 8, wherein, in said step A, said multicast service channel is constructed by the way of point to multipoint label switched channel.

10. The method according to claim 8, wherein, in said step A, said multicast service channel is constructed by the way of Generic Routing Encapsulation channel.

11. The method according to claim 8, wherein, in said step A, said multicast service channel is constructed by virtue of any one or more of the following Multicast Protocol of layer 3:
PIM-SM, PIM-DM, DVMRP, MOSPF, MSDP.

12. The method according to any of claims 6 to 11, wherein said multicast management message is an IGMP adding message.

13. A method, in a mobile communication system with a mobile base station connected to at least one mobile core network via an access device in a fixed network, of providing multicast service to said mobile base station by an access device in said fixed network, said method comprising the steps of:
α . acquiring a multicast management message from said mobile base station;
β . creating, according to said multicast management message, a multicast tree in a multicast virtual LAN to which said multicast management message belongs; wherein, said multicast virtual LAN to which said multicast management message belongs is configured in a access/convergence network in said fixed network, and for the multicast service of one of said at least one mobile core network;
γ forwarding said multicast management message in the multicast virtual LAN to which said multicast management message belongs;
λ. acquiring the multicast service data requested by said multicast management message and forwarding it to said mobile base station.

14. The method according to claim 13, after said step α and prior to said step β further comprising the step of:
- determining the multicast virtual LAN to which said multicast management message belongs according to said multicast management message.

15. The method according to claim 13 or 14, after said stepα, further comprising the steps of:
- judging whether said mobile base station has permission to receive the multicast service data requested by said multicast management message, according to said multicast management message;
performing the rest steps, if said mobile base station has said permission.

16. The method according to any of claims 13 to 15, wherein said multicast management message is an IGMP adding message.

17. A first service providing device, in a mobile communication system with a mobile base station connected to a mobile core network via an edge routing device in a fixed network, in the gateway connecting said fixed network with said mobile core network, for providing service to said mobile base station, said first service providing device comprising:
a first service-data acquiring device configured to acquire service data from said mobile core network;
a first service-data sending device configured to send, if said service data from said mobile core network is data of multicast service, said data of said multicast service to said edge routing device in said fixed network, via a multicast service channel between said gateway and an edge routing device in said fixed network.

18. The first service-providing device according to claim 17, further comprising:
a first multicast-channel determining device, configured to determine a multicast service channel between said gateway and said edge routing device in said fixed network.

19. The first service-providing device according to claim 18, wherein said multicast service channel is constructed by the way of point to multipoint label switched channel.

20. The first service-providing device according to claim 18, wherein said multicast service channel is constructed by the way of Generic Routing Encapsulation channel.

21. The first service-providing device according to claim 18, wherein said multicast service channel is constructed by virtue of any one or more of the following Multicast Protocol of layer 3:
PIM-SM, PIM-DM, DVMRP, MOSPF, MSDP.

22. A second service-providing device, in a mobile communication system with a mobile base station connected to a mobile core network via an edge routing device in a fixed network, in the edge routing device in said fixed network, for providing multicast service to said mobile base station, said second service-providing device comprising:
a first acquiring device for multicast management message, configured to acquire a multicast management message from said mobile base station;
a first creating device for multicast tree, configure to create, according to said multicast management message, a multicast tree in a multicast virtual LAN to which said multicast management message belongs; wherein, said multicast virtual LAN to which said multicast management message belongs is configured in a access/convergence network in said fixed network, and for the multicast service of one of said at least one mobile core network;
a second sending device for service data, configured to send out the multicast service data requested by said multicast management message according to said multicast tree.

23. The second service-providing device according to claim 22, further comprising:
a first determining device for multicast virtual LAN, configured to determine the multicast virtual LAN to which said multicast management message belongs according to said multicast management message.

24. The second service-providing device according to claim 22 or 23, further comprising:
a second determining device for multicast channel, configured to determine the multicast service channel between said edge routing device and a gateway connecting said fixed network with the mobile core network for which said multicast virtual LAN is used;
a second acquiring device for service data, configured to acquire the multicast service data requested by said multicast management message via said multicast service channel.

25. The second service-providing device according to claim 24, wherein said multicast service channel is constructed by the way of point to multipoint label switched channel.

26. The second service-providing device according to claim 24, wherein said multicast service channel is constructed by the way of Generic Routing Encapsulation channel.

27. The second service-providing device according to claim 24, wherein said multicast service channel is constructed by virtue of any one or more of the following Multicast Protocol of layer 3:
PIM-SM, PIM-DM, DVMRP, MOSPF, MSDP.

28. The second service-providing device according to any of claims 22 to 27, wherein said multicast management message is an IGMP adding message.

29. A third service-providing device, in a mobile communication system with a mobile base station connected to at least one mobile core network via an access device in a fixed network, in an access device in said fixed network, for providing multicast service to said mobile base station, said third service-providing device comprising:
a second acquiring device for multicast management message, configured to acquire a multicast management message from said mobile base station;
a second creating device for multicast tree, configured to create, according to said multicast management message, a multicast tree in a multicast virtual LAN to which said multicast management message belongs; wherein, said multicast virtual LAN to which said multicast management message belongs is configured in a access/convergence network in said fixed network, and for the multicast service of one of said at least one mobile core network ;
a forwarding device for multicast management message, configured to forward said multicast management message in the multicast virtual LAN to which said multicast management message belongs;
a service-data forwarding device, configured to acquire the multicast service data requested by said multicast management message and forward it to said mobile base station.

30. The third service-providing device according to claim 29, further comprising:
a second determining device for multicast virtual LAN, configured to determine the multicast virtual LAN to which said multicast management message belongs according to said multicast management message.

31. The third service-providing device according to claim 29 or 30, further comprising:
an access permission judging device, configured to judging whether said mobile base station has permission to receive the multicast service, according to said multicast management message acquired by said second acquiring device for multicast management message;
the rest devices in said third service-providing device performing respective operation, if said mobile base station has said permission.

32. The third service-providing device according to any of claims 29 to 31, wherein said multicast management message is an IGMP adding message.

33. A gateway for connecting a fixed network and a mobile core network, comprising the first service-providing device of any one of claims 17 to 21.

34. An edge routing device, comprising the second service-providing device of any one of claims 22 to 28.

35. An access device, comprising the third service-providing device of any one of claims 29 to 32.
